# EUROPEAN PATENT APPLICATION

(11) **EP 1 346 673 A1**
(43) Date of publication of application: **24.09.2003**
(21) Application number: 00986983.5
(22) Date of filing: 26.12.2000
(51) Int. Cl.: A47F 11/06, A47G 1/00

(54) **LIGHTENESS DIFFERENCE MULTI-FUNCTION ORNAMENTAL SCREEN**

(71) Applicant: Lin, Yongen, Beijing 100007 (CN)
(72) Inventor: Lin, Yongen, Beijing 100007 (CN)
(74) Representative: Gill, David Alan
(86) International application number: CN0000731
(87) International publication number: WO02051288

(57) **Abstract**

A brightness difference ornamental screen with multi-fiction includes an ornamental layer, a light display member and a control device for controlling the light display member. The ornamental layer is set up in front of the light display member. The light display member is connected to the control device. The ornamental layer is a semi-transparent pattern. The light display member is a light source. There are contents to be displayed behind the ornamental layer. The control device is a key or a touch switch or an electronic switch to make the light source turn on/off. The ornamental screen has functions as an ornament, as well as displays contents behind the ornamental layer. The ornamental screen has dual-purpose and may utilize space sufficiently, while its structure is simple and purpose is widespread.

## Description

### BACKGROUND OF THE INVENTION

### 1. FIELD OF THE INVENTION

The present invention relates to an ornamental screen, and more particularly to a m ulti-function ornamental screen which can display or hide its inside contents and has multi functions as an ornamental picture, a mirror, a compound of an ornamental picture and a mirror through which a brightness contrast changes a reflective light or transmissive light.

### 2. DESCRIPTION OF THE RELATED ART

A conventional ornamental screen has a single ornament function. In some occasions, however, such as there is a secret map or important information picture, a curtain is often set up in front of the secret map or important information picture to keep the secrets properly. Lift up the curtain when the ornamental screen is in use, and pull on the curtain when the ornamental screen is not in use. However, it can not keep the secrets very well by this way.

In addition, a television is always put outside in a family or in a hotel at present, which need to occupy a great many spaces. If the television is wanted to inlay a decorative thing (such as a wall, a cupboard), there is not yet a suitable ornamental screen which has functions as an ornament, as well as displays information on the television screen now.

U.S. Pat. No. 5,956,181 to William Lin disclosed a dual-function mirror which has functions as a rearview mirror and a video display unit. The dual-function mirror works with a camera in an automobile. When a displayer of the mirror does not work, it is a conventional rearview mirror which can observe the rear situations of the automobile conveniently. When the displayer works, its inside contents can be displayed as various kinds of needed picture information through the mirror. However, the structure of the dual-function mirror can only make the picture and the mirror convert each other, which has a limited application.

### SUMMARY OF THE INVENTION

Accordingly, an object of the present invention is to provide a brightness difference ornamental screen with multi-function which has functions as an ornament, as well as displays contents behind the ornamental layer and has dual-purpose and utilize spaces sufficiently, while its structure is simple and purpose is widespread.

To achieve the above object, a brightness difference ornamental screen with multi-function in accordance with preferred embodiments of the present invention comprises an ornamental layer. The ornamental layer is set up in front of a light display member. The light display member is connected to a control device for controlling the light display member.

The ornamental layer is a semi-transparent pattern. The light display member is a light source. There are contents to be displayed behind the ornamental layer. The control device is a key or a touch s witch or an electronic s witch to make the light source turn on/off,

The light display member is set up in an ornamental screen and is a display screen of a computer, an electronic device or a television. The ornamental layer is a semi-transparent ornamental picture.

The ornamental layer is a semi-transparent pattern made by laser craft, or a metallization membrane or plated membrane made in polishing or texturing or printing ways.

A plurality of display members is set up in the ornamental layer.

The ornamental layer is a reflective mirror or a pattern added a partial mirror or a compound of a pattern and a mirror.

The light display member is a display screen of a Beep-Pager or a cellular phone, or a palmtop computer or an electronic dictionary or an instant translator or a computer.

A transparent plate or b racket for protecting the inside contents is set up inside the ornamental layer,

A case is provided outside the ornamental layer and a display screen, a lens and a reflective mirror is installed in front of the display screen. The ornamental layer is set up on the case. A light display member has light display contents and is set up inside the semi-transparent ornamental layer. The light or dark of the light display member is controlled by an outside switch. The display contents are inserted in or taken out from an opening of the case.

The semi-transparent ornamental layer is a single layer integral structure made from semi-transparent materials or a compund layer structure made of transparent mirror stuck to a semi-transparent membrane. The light display member inside the semi-transparent ornamental layer is a light source or a light source added a lens or an electronic displayer having functions of light and display.

The semi-transparent ornamental layer is an integral ornamental layer whole enclosed the case and installed at an opening or a partial ornamental layer enclosed the case and installed at the opening.

Size scales showing the volume and position of the reflective objects are marked on the semi-transparent ornament layer or displayed on an electronic display screen.

A display piece or display screen having information display contents is set up in front of or backside of a light direction of the light source.

The ornamental screen of the present invention has characters of partly reflective light or interdictive light, thus it has functions of decorating, keeping secrets and etc., and has transmissive functions which display inside information contents through the ornamental screen while its inside light source or electronic displayer works. The ornamental screen of the present invention can accomplish a plurality of functions and has multi-purpose; The ornamental screen of the present invention can put a television into a wall in a family, hotel or hospital, and etc., and has functions as an ornament and d isplays information on the television display screen at front of the television. The ornamental screen of the present invention can save a lot of occupations and beautify the environments. When the television does not work, the ornamental screen looks like a picture or a mirror. When the television is on, pictures are displayed on the ornamental screen; When the ornamental screen of the present invention is used as a ornamental screen of a Beep-Pager or cellular phone or palmtop computer, instant translator or notebook, it can especially meet a women's dressing demand, which needn't hand-carry a dressing mirror; An ornamental mirror installed in a sunshading board in an automobile has dual purposes of a dressing mirror and an electronic displayer; The ornamental screen of the present invention can attain a complete design, e.g., buttons and p atterns are distributed on the ornamental screen. When the ornamental screen works, only the inside parts having patterns display its inside contents for the light, while the other parts are not changed yet, which make its appearance beautiful; The ornamental screen of the present invention has simple structures, convenient utility and widespread purpose.

Other objects, advantages and novel features of the present invention will be drawn from the following detailed descriptions of preferred embodiments of the present invention with the attached drawings, in which:

### BRIEF DESCRIPTION OF THE DRAWINGS

FIG. 1 is a perspective view showing a general structure of a brightness difference ornamental screen with multi-function in accordance with the present invention;

FIG. 2 is a front view of a brightness difference ornamental screen with multi-function in accordance with a first preferred embodiment of the present invention;

FIG. 3 is a side sectional view of the brightness difference ornamental screen with multi-function of FIG. 2;

FIG 4 is a side view of a brightness difference ornamental screen with multi-function in accordance with a second preferred embodiment of the present invention;

FIG. 5 is a front view of a brightness difference ornamental screen with multi-function in accordance with a third preferred embodiment of the present invention;

FIG. 6 is a front view of a brightness difference ornamental screen with multi-function in accordance with a fourth preferred embodiment of the present invention;

FIG. 7 is a side view of the brightness difference ornamental screen with multi-function of FIG. 6;

FIG. 8 is a perspective view of a brightness difference ornamental screen with multi-function in accordance with a fifth preferred embodiment of the present invention;

FIG. 9 is a perspective view of a brightness difference ornamental screen with multi-function in accordance with a sixth preferred embodiment of the present invention;

FIG, 10 is a side sectional view of a brightness difference ornamental screen with multi-function in accordance with a seventh preferred embodiment of the present invention;

FIG. 11 is a side sectional view of a brightness difference ornamental screen with multi-function in accordance with a eighth preferred embodiment of the present invention;

FIG. 12 is a side sectional view of a brightness difference ornamental screen with multi-function in accordance with a ninth preferred embodiment of the present invention;

FIG. 13 is a perspective view of a brightness difference ornamental screen with multi-function in accordance with a tenth preferred embodiment of the present invention;

FIG. 14 is a perspective view of a brightness difference ornamental screen with multi-function in accordance with a eleventh preferred embodiment of the present invention; and

FIG. 15 is a side sectional view of a brightness difference ornamental screen with multi-function in accordance with a twelvth preferred embodiment of the present invention.

### DESCRIPTION OF THE PREFERRED EMBODIMENT

Structures and work principles of a brightness difference ornamental screen with multi-function of the present invention will be described in its preferred embodiments.

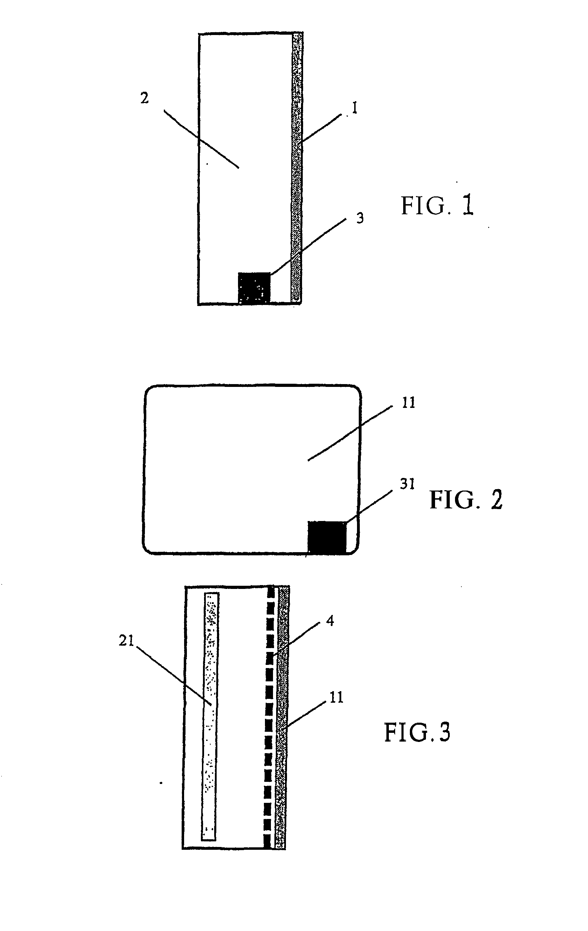

Referring to FIG. 1, a brightness difference ornamental screen with multi-function in accordance with the present invention comprises an ornamental layer 1, a light display member 2 and a control device 3 for controlling the light display member. The control device 3 is connected to the light display member 2. The ornamental layer 1 is provided in front of the light display member 2. The ornamental layer 1 can hide or display images or contents in the ornamental s creen depending on light situations of the light display member 2 through transmitted lights, reflected lights or interdicted lights.

FIGs. 2 and 3 show a first preferred embodiment of the present invention. The ornamental layer is a semi-transparent ornamental pattern 11 like a picture made by laser technology (Prior Art, not stated again). The light display member is a light source 21. Contents to be displayed 4 are set up behind the ornamental pattern 11. The contents 4 can be maps or drawings needed to be kept secret, or the like. The control device 31 is a special controller to make the light source 21 turn light or opaque. When the ornamental screen is used in a secret occasion, the inside contents 4, s uch as secret maps or important information p ictures, can't be seen because of a reflective light character of a surface of the ornamental pattern 11. While the light display member or the other light source is turned on, contents 4 to be displayed can be clearly seen by utilizing a transmissive light character of the ornamental pattern 11.

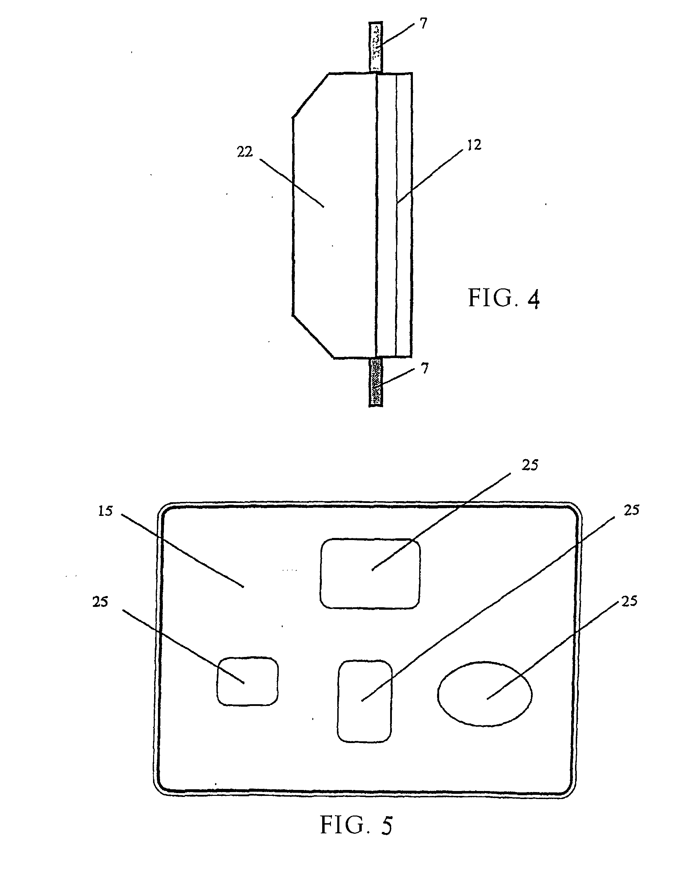

FIG. 4 shows a second preferred embodiment of the present invention. The light display member provided in a wall 7 is a display screen 22 of a computer, an electronic device or a television. The ornamental layer is a semi-transparent ornamental picture 12, The control device for the light display member is a display screen switch of a computer, an electronic device or a television. When the switch is off, an ordinary ornamental picture, a mirror or a compound pattern of the ornamental picture and the mirror appears in front of the display screen. A picture or a mirror is can be seen, while the contents behind the ornamental layer is not can be seen clearly. When the switch is on, pictures in the computer, or electronic device or television can be displayed clearly on the ornamental layer in front of the display screen. The ornamental screen can be widely applied in public places such as an advertisement field for advertisements, a bank for payment, a supermarket place for information inquiry, or other places for beautification or decoration, and etc.. It also can be used in a medical institution for guardianship, test equipment, axenic sanitation, or in a house, hotel or restaurant, which not only produces a beautiful view, but also greatly saves occupations; Especially when it is used outdoor, the ornamental screen provides a protection function such as seal of dustproof, waterproof and shielding the sunshine and an ornament function. At the same time it does not influence on the normal image display functions.

The ornamental layer of the present invention can be a surface-managed film, a special film, or a pattern made by laser craft, or a metallized membrane, plated membrane having half reflective light and half transmissive light characters made by such ways as polishing, texturing, printing, or the like, or a semi-transparent anti-counterfeit mark or an ornamental m embrane made by controlling the manufacture craft as requirement to obtain the needed light reflectivity and transmissive light ratio, or the like, The not-good transparent materials or transparent materials mixed with impurities having reflective light and transmissive light functions are also a suitable selection, for example a medium mirror made of smoke color glass.

FIG. 5 shows an ornamental screen in accordance with a third preferred embodiment of the present invention. A plurality of light display members 25 having different shapes or different types is installed in an ornamental layer 15. The ornamental screen can be used in many occasions.

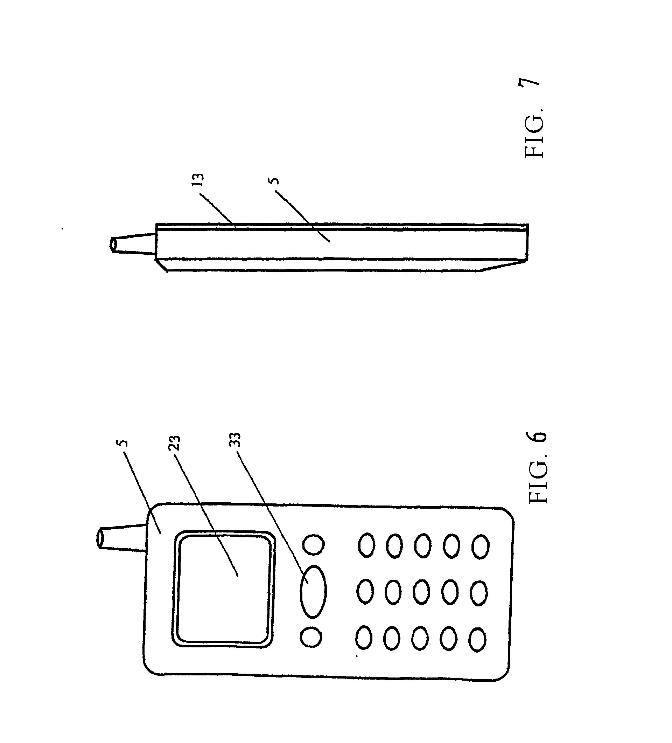

FIGS. 6 and 7 show a fourth preferred embodiment of the present invention. The ornamental layer is a reflective mirror or a pattern added a partial mirror or a compound of a pattern and a mirror 13. The light display member is a display screen 23 of a Beep-Pager, a c ellular p hone 5, a p almtop c omputer, a n electronic dictionary, an instant translator or a computer. The control device for the light display member is a display screen switch 33 of the Beep-Pager, cellular phone 5, palmtop computer, electronic dictionary, instant translator or computer. When the display screen switch is off, the ornamental layer is a reflective mirror, which can be used as a dressing mirror by a user, especially by a woman. When the display screen switch is on, the ornamental layer has a transmissive light character, which can clearly display the contents in the Beep-Pager, cellular phone or palmtop computer, thus the ornamental screen has many increased functions.

A semi-transparent membrane having a reflective light and transmissive light character is plated or glued on a surface of the reflective mirror 13, which can be manufactured by following ways:
An original reflective light membrane of the mirror is change into a semi-transmissive light membrane. An original surface of the main body (such as glass, transparent plastics or ordinary materials having needed reflective light surface) of the mirror is plated a thin membrane (such as aluminium membrane, silver membrane) having a reflective light and transmissive light character, or a thin film made from materials having reflective light and transmissive light character glued a film having a reflective light and transmissive light character. The surface of the mirror can also be materials which are not good transparent or transparent materials mixed some impurities, which make the ornamental screen have functions of reflective light and transmissive light (such as medium mirror made from smoke color or the like).

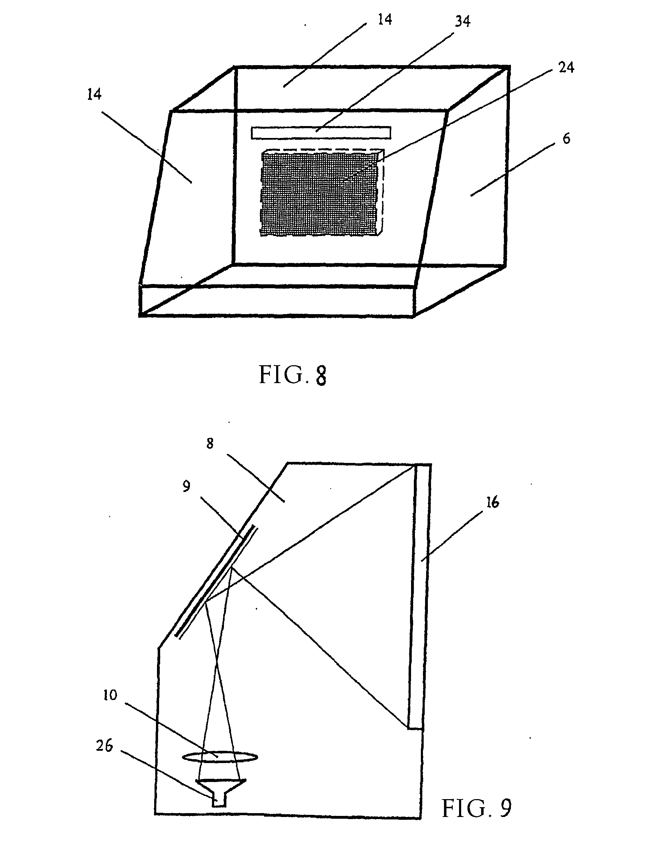

FIG. 8 shows a fifth preferred embodiment of the present invention. A transmissive plate or bracket 6 for protecting inside contents 24 is installed in an ornamental layer 14. When brightness of an inside light source 34 is dark, the transmissive plate 6 with an ornamental layer shows a reflective light or an interdictive light character, When the inside light source 34 is bright, the transmissive plate 6 shows a a transmissive light character, for example exhibition platform in the museum or exhibition cupboard in a marketplace,

FIG. 9 shows a sixth preferred embodiment of the present invention. An ornamental layer 16 and a display screen 26 are installed in a case 8. A lens 10 and a reflective mirror 9 are installed in front of the display screen 26. For example, screens of a rear-projection type cinema or a rear-projection type large-screen television, are no longer a single white or dark colour and usually are a beautiful picture, which can beautify the environments. The display member can transmit images through the ornamental layer as a screen,

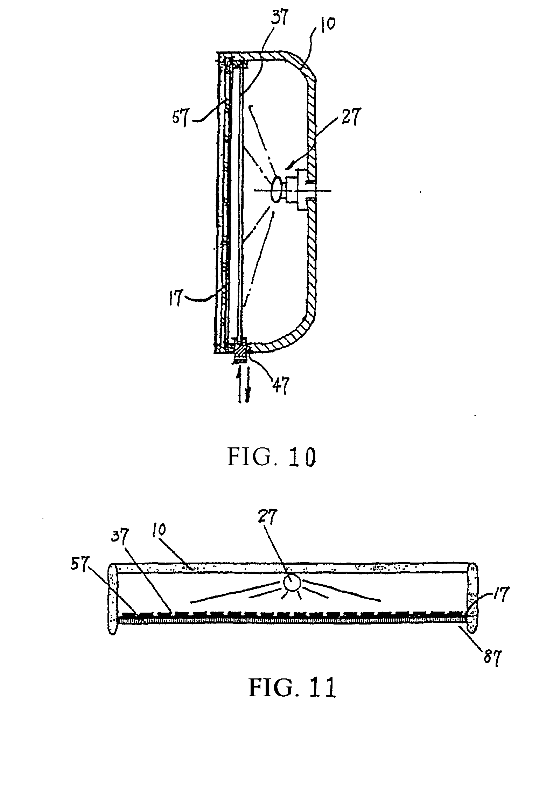

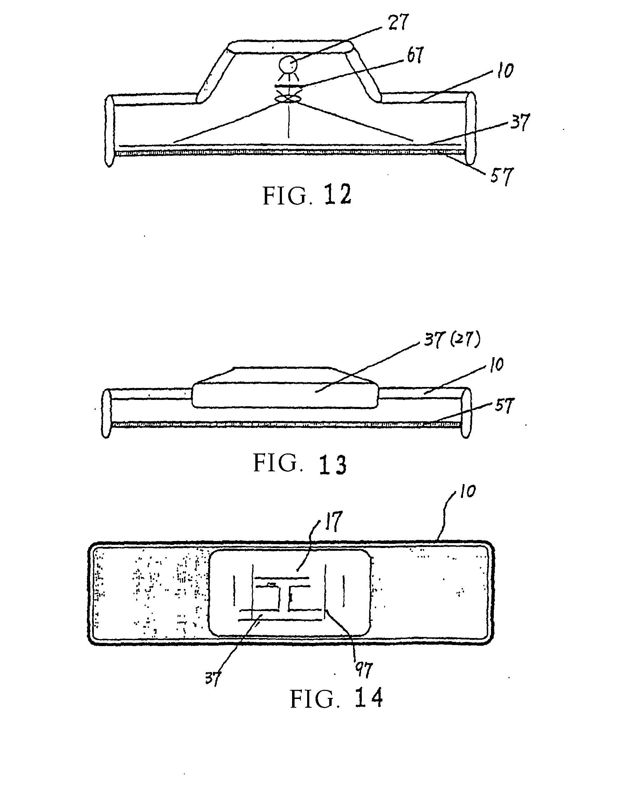

FIGS. 10, 11, 12, 13, 14 and 15 respectively show a seventh, eighth, ninth, tenth, eleventh and twelfth preferred embodiment of the present invention. An ornamental layer 17 is installed in a case 10. The ornamental layer 17 is semi-transparent. A light display member 27 having display contents 37 i installed inside of the ornamental layer 17. Bright or dark of the light display member 27 is controlled by an outide switch. The display contents 37 are inserted in or taken out from an opening 47 of the case 10. Referring to FIGs. 11 and 12, the display piece or display screen can be inserted or changed from the opening 47 of the case 10. The display piece or display is generally made of a transparent or semi-transparent film or membrane.

The semi-transparent ornamental layer 17 is a single layer integral structure made from semi-transparent materials or a compound layer structure made of a transparent mirror 57 and a semi-transparent membrane stuck to the transparent mirror 57. Referring to FIGs. 11 to 14, the light display member inside the semi-transparent ornamental layers 17 is a light source or a light source added a lens 67 or an electronic displayer having functions of light and display.

Referring to FIGS. 11 and 12, a display piece or display screen 77 having information display contents is provided in the case 10 installed between the light source and the semi-transparent ornamental layer.

Referring to FIGS, 10 to 14, the semi-transparent ornamental layer 17 full enclosed the case 10 is an integral ornamental layer installed at an opening 87 or the semi-transparent ornamental layer 17 enclosed the case 10 is a partial ornamental layer installed at the opening 87.

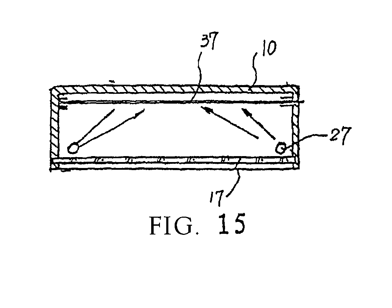

Referring to FIG. 14, size scales 97 are marked on the semi-transparent ornamental layer showing a volume and position of a reflective object.

Referring to FIG. 11 or 15, the display piece or display screen having information display contents is installed in front of or backside of a light direction of the light source.

The present invention can also be used in an automobile rearview mirror. The followings are detailed descriptions:
A rear view mirror only having rear view function is changed into a dual-function mirror as a rear view mirror and a video displayer. Information such as maps, way m aps, or the like or an electronic displayer can be freely put in the mirror. Usually when there is no light in the mirror, the mirror is an ordinary rear view mirror. When there is light in the mirror, information in the mirror is can be seen. Making the inside mirror light or not can change the functions of the rear view mirror.

The automobile rear view mirror has benefits:

First, the driver can attain more information (such as maps, time tables, way maps, suggestive information put in advance and pictures shown on an electronic displayer from a video camera, and scenes behind the automobile, and etc.) from the rear view mirror without his habits changed and his attention dispersed.

Second, the installation position and basic structure of the transmissive and reflective light rear view mirror is just replaced of the original ordinary rear view mirror's, thus it can not cause the driver and passengers have burdensome senses and insecurity senses for the increased new things in automobile.

Third, the switch is controlled artificially. The driver can choose to use it as a transmissive and reflective light mirror seeing the inside information or as an ordinary rear view mirror at any time in necessary.

Fourth, the light area inside the mirror can be changed to make the mirror into a whole transmissive and reflective light mirror or a partial transmissive and reflective light mirror (see FIG. 14).

Fifth, the reflective way which the light source is put in front of the display screen (see FIG. 15) can be attained.

This transmissive and reflective light mirror has three work states: ordinary reflective light rear view mirror, reflective light added pictures, and all the display pictures; When the transmissive and reflective light mirror works as an electronic rear view mirror made from electronic displayer, scales showing the width and height of an automobile are marked on the opposite area of the display medium mirror, thus to benefit the driver judging the relative position of the automobile and the other outside objects (see FIG. 14).

This rear view mirror can be made into several structure forms: direct light and picture way, see FIG. 11, projective picture way, see FIG. 12, electronic display way, see FIG. 13.

An electronic display screen can also put in a dressing mirror of a sunshading board of the automobile, the original mirror is changed into the semi-transparent and half reflective light ornamental screen of the present invention, which it is still a dressing mirror in normal, and the display contents can be seen when the electronic display screen works.

While the present invention has been illustrated by the descriptions of the preferred embodiments thereof, and while the embodiments has been described in considerable detail, it is not intended to restrict or in any way limit the s cope of the appended claims to such detail. Additional advantages and modifications within the spirit and scope of the present invention will readily appear to those skilled in the art. Therefore, the present invention is not limited to the specific details and illustrative example shown and described.

## Claims

1. A brightness difference ornamental screen with multifunction comprising:
an ornamental layer;
a light display member;
a control device;
wherein the ornament layer is set up in front of the light display member, the light display member is connected to the control device for controlling the light display member.

2. The ornamental screen as claimed in claim 1, wherein the ornamental layer is a semi-transparent pattern, the light display member is a light source, there are contents to be displayed behind the ornamental layer, the control device is a key or a touch switch or an electronic switch to make the light source turn on/off.

3. The ornamental screen as claimed in claim 1, wherein the light display member is set up in an ornamental thing, the light display member is a display screen of a computer, an electronic device or a television, the ornamental layer is a semi-transparent ornamental picture.

4. The ornamental screen as claimed in claim 1, wherein the ornamental layer is a semi-transparent pattern made by laser craft, or a metallization membrane or plated membrane made in polishing or texturing or printing ways,

5. The ornamental screen as claimed in claim 1, wherein a plurality of display members is set up in the ornamental layer.

6. The ornamental screen as claimed in claim 1, wherein the ornamental layer is a reflective mirror or a pattern added a partial mirror or a compound of a pattern and a mirror.

7. The ornamental screen as claimed in claim 6, wherein the light display member is a display screen of a Beep-Pager or a cellular phone, or a palmtop computer or an electronic dictionary or an instant translator or a computer.

8. The ornamental screen as claimed in claim 1, wherein a transparent plate or bracket for protecting the inside contents is set up inside the ornamental layer.

9. The ornamental screen as claimed in claim 1, wherein a case is provided outside the ornamental layer and a display screen, a lens and a reflective mirror is installed in front of the display screen.

10. The ornamental screen as claimed in claim 1, wherein the ornamental layer is set up on the case, the light display member has light display contents, which is installed inside the ornamental layer, the light or dark of the light display member is controlled by an outside switch, the display contents are inserted in or taken out from an opening of the case.

11. , The ornamental screen as claimed in claim 1, wherein the semi-transparent ornamental layer is a single layer integral structure made from semi-transparent materials or a compund layer structure made from transparent mirror stuck to a semi-transparent membrane, the light display member inside the ornamental layer is a light source or a light source added a lens or an electronic display device having functions of light and display.

12. The ornamental screen as claimed in claim 1, wherein the ornamental layer is an integral ornamental layer whole enclosed the case and installed at the opening or a partial ornamental layer enclosed the case and installed at the opening.

13. The ornamental screen as claimed in claim 1, wherein size scales showing the volume and position of the reflective objects are marked on the ornamental layer or displayed on an electronic display screen.

14. The ornamental screen as claimed in claim 14, wherein a display piece or display screen having information display contents is installed in front of or backside of the light direction of the light source.
